# EUROPÄISCHE PATENTANMELDUNG

(11) **EP 0 798 587 A2**
(43) Veröffentlichungstag der Anmeldung: **01.10.1997**
(21) Anmeldenummer: 97102321.3
(22) Anmeldetag: 13.02.1997
(51) Int. Cl.: G02B 26/10

(54) **Lichtfleckerzeugungsvorrichtung**

(30) Priorität: 29.03.1996 DE 19612710
(71) Anmelder: Sick AG, 79183 Waldkirch, Breisgau (DE)
(72) Erfinder: Anselment, Christoph, 79100 Freiburg (DE); Hippenmeyer, Heinrich, 79348 Freiamt (DE)
(74) Vertreter: Finsterwald, Martin, Dr.

(57) **Zusammenfassung**

Eine Lichtfleckerzeugungsvorrichtung weist eine Punktlichtquelle 11 und eine Variooptik 12, 13 veränderlicher Brennweite auf, mittels der die Punktlichtquelle 11 über eine Lichtablenkvorrichtung 24 in einer Abbildungsfläche 14 abgebildet wird. Die Variooptik wird durch zwei kreisförmige, zueinander gekreuzte Zylinderspiegel 12', 13' gebildet, die in Richtung ihrer kreisförmigen Zylinderachsen 17', 18' eine veränderliche Brennweite aufweisen und verstellbar sind. Sie werden vom Abbildungslichtbündel 19, 19' in Richtung der optischen Achsen 15 beaufschlagt.

## Beschreibung

Die Erfindung betrifft eine Lichtfleckerzeugungsvorrichtung nach dem Oberbegriff des Patentanspruchs 1.

Derartige Lichtfleckerzeugungsvorrichtungen werden im allgemeinen bei Abtastvorrichtungen verwendet, wo beispielsweise mittels eines Spiegelrades ein Lichtstrahl, insbesondere ein Laserstrahl, auf eine abzutastende Oberfläche gelenkt wird und dort einen eine periodische Abtastbewegung ausführenden, insbesondere kreisrunden Lichtfleck erzeugt. Die Lichtablenkvorrichtung kann dabei vorzugsweise über F-θ-Objektive eine V-förmige Abtastbewegung des Lichtstrahls (DE-PS 36 00 578) oder mittels eines Hohlspiegels einen parallel zu sich selbst verschobenen Fahrstrahl (DE-PS 23 40 688) erzeugen.

Bei Abtastproblemen, wo die Abtastflächen, beispielsweise an Gegenständen angebrachte Codemarken in sehr unterschiedlichen Abständen zur Lichtfleckerzeugungsvorrichtung angeordnet sein können, weist der auf die Oberfläche der Abbildungsfläche scharfgestellte Lichtfleck je nach dem Abstand der Abbildungsfläche von der Lichtablenkvorrichtung eine sehr unterschiedliche Größe auf. Da es aber andererseits bei der Abtastung von beispielsweise aus Balken bestehenden Codes darauf ankommt, daß die Größe des Lichtflecks in einer vorbestimmten Beziehung zur Breite der Codebalken steht, hat man die Punktlichtquelle bereits mittels einer Variooptik, d.h. eine Optik mit veränderlicher Brennweite, auf die Abbildungsfläche abgebildet (US-PS 4 920 255), um unabhängig vom Abstand zwischen der Lichtablenkvorrichtung und der Abbildungsfläche immer die gleiche Lichtfleckgröße auf der Abbildungsfläche erzeugen zu können. Bekannte Varioobjektive bestehen aus mehreren Linsen, die in Richtung der optischen Achse verschiebbar zueinander angeordnet sind, um die Brennweite verändern zu können. Derartige Varioobjektive sind jedoch kostspielig und vor allen Dingen in Richtung der optischen Achse platzaufwendig, weil auch der Platz für die axiale Verschiebung von Linsen zur Verfügung stehen muß.

Das Ziel der vorliegenden Erfindung besteht darin, eine Lichtfleckerzeugungsvorrichtung der eingangs genannten Gattung zu schaffen, mit der in der Abbildungsfläche Lichtflecke unterschiedlicher Größe und vorzugsweise auch unterschiedlicher Form ohne Verwendung mehrerer, in Richtung der optischen Achse relativ zueinander verschiebbarer Linsen erzeugt werden können.

Zur Lösung dieser Aufgabe sind die Merkmale des kennzeichnenden Teils des Anspruchs 1 vorgesehen.

Der Erfindungsgedanke ist also darin zu sehen, daß statt einer sphärischen oder parabolischen Optik zwei im Bereich des Strahlenbündeldurchgangs gekreuzte Zylinderoptiken verwendet werden, wobei die Brennweitenänderung dadurch herbeigeführt wird, daß jede Zylinderoptik entlang ihrer Zylinderachse mit veränderrlichen Brennweiten ausgestattet ist, so daß durch eine Verschiebung der beiden im Bereich des Lichtdurchtritts gekreuzten Zylinderoptiken in Richtung ihrer Zylinderachsen, d.h. senkrecht zur optischen Achse, problemlos unterschiedliche Brennweiten realisiert werden können. Als besonders vorteilhaft erweist es sich dabei, daß die beiden Zylinderoptiken an den Stellen, wo sie vom Abbildungslichtbündel beaufschlagt werden, zwar die gleiche Brennweite haben können, so daß sie insgesamt wie eine parabolische oder sphärische Optik wirken, jedoch auch unterschiedliche Brennweiten haben können, so daß statt eines kreisförmigen Lichtflecks auch elliptische Lichtflecke mit unterschiedlichen Exzentrizitäten erzeugt werden können. Bei Anordnung der beiden Zylinderoptiken relativ zueinander ist lediglich darauf zu achten, daß die Zylinderachsen an den Stellen, wo sie vom Abbildungslichtbündel beaufschlagt werden, zumindest im wesentlichen senkrecht aufeinanderstehen, so daß die beiden Zylinderoptikbereiche an diesen Stellen gemeinsam die Wirkung einer parabolischen oder sphärischen Optik haben.

Nach den Ansprüchen 2 und 3 können die Zylinderoptiken Zylinderlinsen oder Zylinderspiegel sein. Zylinderspiegel sind aus Herstellungsgründen jedoch bevorzugt.

Weiter können die Zylinderoptiken gemäß den Ansprüchen 4 und 5 geradlinig oder kreisförmig sein. Die Kreisform ist aus Platzgründen und auch zur Erzielung einer einfachen Verstellbarkeit bevorzugt. Hierzu können auf einer Kreisscheibe gemäß Anspruch 6 in kompakter Weise sehr viele unterschiedliche Zylinderlinsenbrennweiten untergebracht werden. Durch Anordnung der Scheibe auf einer Drehwelle kann außerdem die Einstellung auf verschiedene Brennweiten problemlos erfolgen.

Die optischen Achsen an jeder Stelle der Zylinderoptiken entlang der Zylinderachse können relativ zur Drehachse gemäß den Ansprüchen 7 bis 10 angeordnet sein.

Besonders bevorzugt ist die Ausbildung nach Anspruch 11, weil hierdurch die Herstellung der Zylinderspiegel-Kreisscheiben im Spritzgußverfahren erleichtert wird. Die Spritzgußformhälfte, die den Zylinderspiegel bildet, kann so auf einfache Weise in Richtung der Drehachse vom Zylinderspiegel nach dessen Spritzformung abgezogen werden.

Mit der erfindungsgemäßen Vorrichtung können letztlich beliebige Brennweitenänderungen entlang der Zylinderachse vorgenommen werden. Bevorzugt sind jedoch die Ausführungen nach den Ansprüchen 12, 13.

Erfolgt auf dem Gesamtumfang der Kreisscheibe eine stetige Zu- oder Abnahme der Brennweite, ergibt sich an einer Stelle des Umfangs eine sprungartige Änderung der Brennweite gemäß Anspruch 14.

Durch die Ausbildung nach Anspruch 15 wird die Herstellung erleichtert, während andererseits die für die Erzeugung eines scharfen Lichtfleckes erforderliche optische Genauigkeit gewährleistet ist.

Bevorzugte Änderungen der Radien der kreisförmigen Oberflächen entnimmt man dem Anspruch 16.

Zur Realisierung platzsparender gefalteter Strahlengänge insbesondere bei der Verwendung von Zylinderspiegeln ist die Ausführungsform nach Anspruch 17 vorteilhaft.

Die Punktlichtquelle ist bevorzugt nach Anspruch 18 ausgebildet.

Die Erfindung wird im folgenden beispielsweise anhand der Zeichnung beschrieben; in dieser zeigt
- Figur 1: eine schematische perspektivische Darstellung des Grundprinzips der erfindungsgemäßen Lichtfleckerzeugungsvorrichtung mit zwei geradlinigen Zylinderlinsen, die
- Figuren 2 a und 2 b: Ansichten von in der Abbildungsfläche erzeugten Lichtflecken in Richtung der Linie II-II von Figur 1, wie sie durch unterschiedliche Verschiebung der beiden Zylinderlinsen nach Figur 1 erzeugt werden können,
- Figur 3: eine Ansicht in Richtung der Achse eines Spiegelrades einer mit zwei Zylinderspiegel-Kreisscheiben arbeitenden Lichtfleckerzeugungsvorrichtung gemäß der Erfindung mit einem Spiegelrad als Lichtablenkvorrichtung, wobei eine weitere Ausführungsform gestrichelt dargestellt ist,
- Figur 4: eine Ansicht des Gegenstandes der Fig. 3 in Richtung des Pfeiles IV von Figur 3,
- Figur 5: eine perspektivische Ansicht einer erfindungsgemäßen Zylinderspiegel-Kreisscheibe schräg von vorne in vergrößertem Maßstab,
- Figur 6: einen vergrößerten Axialschnitt einer Ausführungsform einer Zylinderspiegel-Kreisscheibe, wie sie in Fig. 3, 4 gestrichelt dargestellt ist, und
- Figur 7: einen Axialschnitt analog Figur 6 einer weiteren Ausführungsform einer Zylinderspiegel-Kreisscheibe, wobei außerdem noch eine Hälfte der beim Spritzgrußverfahren verwendete Formhälfte während des axialen Abzugs von der spritzgegossenen Zylinderspiegel-Kreisscheibe veranschaulicht ist.

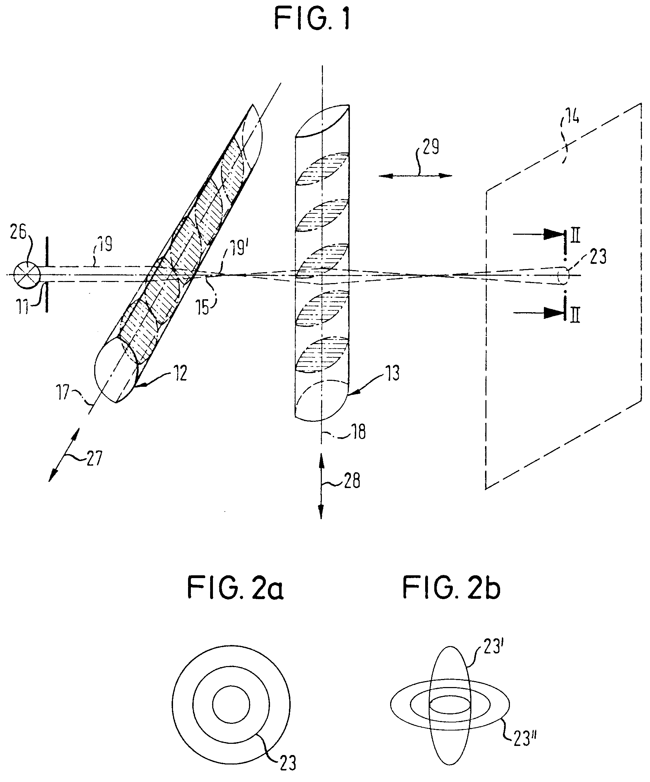

Nach Figur 1 geht von einer als Glühlampe 26 mit einem dahinter angeordneten Spalt symbolisierten Punktlichtquelle 11 ein schmales paralleles Abbildungslichtbündel 19 mit kreisförmigem Querschnitt aus, welches z.B. einen Durchmesser von 0,5 bis 1 mm hat und auf eine Zylinderlinse 12 senkrecht zu deren Zylinderachse 17 sowie parallel zu deren senkrecht auf der Zylinderachse 17 stehenden optischen Achse 15 auftrifft.

In geringem Abstand hinter der ersten Zylinderlinse 12 befindet sich eine zweite Zylinderlinse 13, deren Zylinderachse 18 relativ zur Zylinderachse 17 der ersten Zylinderlinse 12 unter einem rechten Winkel steht und die ebenfalls mit ihrer optischen Achse 15 so angeordnet ist, daß das aus der Zylinderlinse 12 austretende Abbildungslichtbündel 19' parallel zur optischen Achse 15 auf die Oberfläche der Zylinderlinse auftrifft. In einem Abstand hinter der zweiten Zylinderlinse 13 ist eine Abbildungsfläche 14 vorgesehen, auf welcher die beiden gekreuzten Zylinderlinsen 12, 13 gemeinsam einen Lichtfleck 23 erzeugen, der ein scharfes Abbild der Punktlichtquelle 11 ist.

Erfindungsgemäß ändern die Zylinderlinsen 12, 13 ihre Brennweite entlang der Zylinderachsen 17, 18 stetig, was durch eine von dem einen Ende zum anderen abnehmenden Krümmung der Zylinderlinsenoberflächen veranschaulicht ist. Außerdem sind die beiden Zylinderlinsen 12, 13 in Richtung der Doppelpfeile 27, 28, d.h. in Richtung der Zylinderlinsenachsen 17 bzw. 18 derart verschiebbar, daß wahlweise Stellen unterschiedlicher Brennweite an den Ort des Abbildungslichtbündels 19, 19' verschoben werden können.

Die Arbeitsweise der beschriebenen Lichtfleckerzeugungsvorrichtung ist wie folgt:

Durch geeignete Verschiebung der Zylinderlinsen 12, 13 in Richtung der Doppelpfeile 27, 28 kann für das Abbildungslichtbündel 19, 19' jeweils eine gewünschte Brennweite der Zylinderlinsen 12, 13 derart ausgewählt werden, daß entweder kreisförmige Lichtflecke 23 unterschiedlicher Größe gemäß Figur 2 a oder elliptische Lichtflecke 23', 23'' unterschiedlicher Größe gemäß Figur 2 b realisiert werden können. Um kreisförmige Lichtflecke 23 unterschiedlicher Größe gemäß Figur 2 a zu erhalten, müssen die Brennweiten der Zylinderlinsen 12, 13 an den Stellen, wo sie vom Abbildungslichtbündel 19, 19' durchquert werden, gleiche Brennweite haben. Die elliptischen Lichtflecke 23', 23'' mit unterschiedlichen Exzentrizitäten gemäß Figur 2 b können dadurch erzielt werden, daß das Abbildungslichtbündel 19, 19' Stellen mehr oder weniger unterschiedlicher Brennweite der beiden Zylinderlinsen 12, 13 durchquert.

Um eine einwandfreie Scharfstellung der Lichtflecke 23, 23', 23'' auf der Abbildungsfläche 14 zu erzielen, kann die Gesamtanordnung aus den Zylinderlinsen 12, 13 oder die Punktlichtquelle 11 in Richtung des Doppelpfeiles 29, d.h. der optischen Achse 15 verschiebbar in einer geeigneten Halterung angeordnet sein, wobei jedoch die Linearverschiebung der Zylinderlinsen 12, 13 in Richtung der Doppelpfeile 27, 28 möglich bleiben muß.

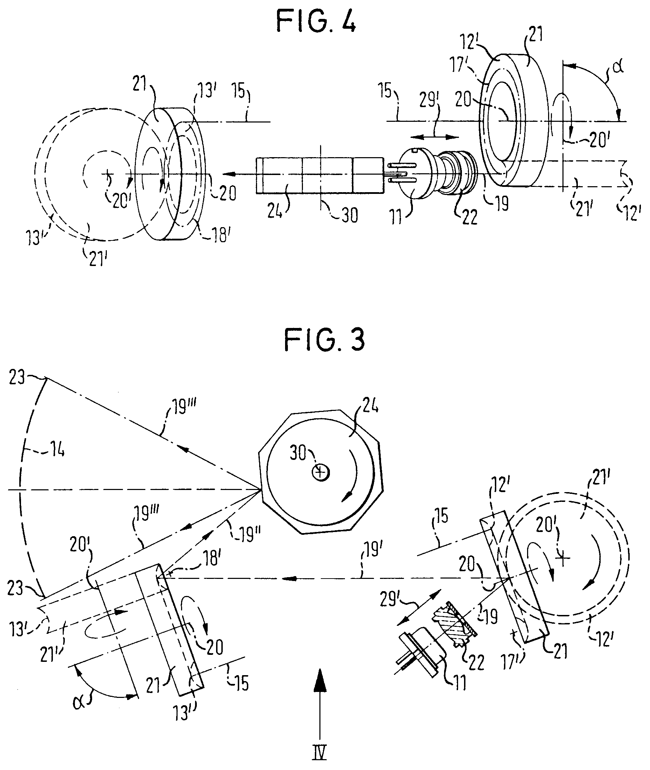

Bei der bevorzugten Ausführungsform nach den Figuren 3 und 4 erzeugt eine Laserdiode 11 über eine Strahlaufweitungsoptik 22 das Abbildungslichtbündel 19, welches unter einem Winkel von ca. 20° auf den Randbereich einer Zylinderspiegel-Kreisscheibe 21 auftrifft, die um eine senkrecht auf der Kreisebene stehende Drehachse 20 drehbar ist. In dem vom Abbildungslichtbündel 19 beaufschlagten Randbereich der Kreisscheibe 21 befindet sich ein kreisförmiger konzentrisch zur Drehachse 20 angeordneter Zylinderspiegel 12' mit einer kreisförmigen Zylinderachse 17'.

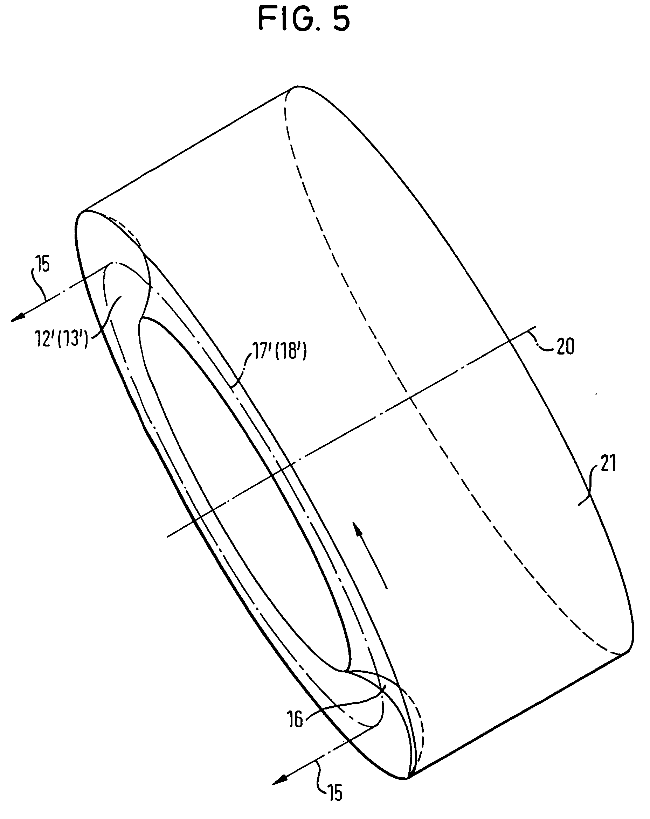

Nach Figur 5 ändert sich der Krümmungsradius des Zylinderspiegels 12' in Richtung des Umfanges stetig, und zwar in Richtung des Pfeiles im abnehmenden Sinne, so daß an einer Umfangsstelle 16 ein Krümmungssprung, d.h. eine Stufe entsteht. Auf diese Weise nimmt die Brennweite des Zylinderspiegels 12' in Umfangsrichtung in Richtung des Pfeiles stetig zu. Die Krümmungsradien können sich beispielsweise stetig von 300 mm bis 1200 mm verändern.

An jeder Stelle des Umfanges befindet sich also ein Zylinderspiegelbereich unterschiedlicher Brennweite, wobei die optische Achse 15 jedes dieser Bereiche parallel zur Drehachse 20 verläuft.

Nach den Figuren 3 und 4 wird das Abbildungslichtbündel 19 an einer Umfangsstelle des Zylinderspiegels 12' reflektiert und gelangt als optisch bereits durch den Zylinderspiegel 12' beeinflußtes Abbildungslichtbündel 19' auf den Randbereich einer weiteren gleichartigen Zylinderspiegel-Kreisscheibe 21, die ebenfalls um eine Drehachse 20 parallel zu den optischen Achsen 15 verdrehbar ist und parallel zum ersten Zylinderspiegel 12' angeordnet ist. Die kreisförmige Zylinderspiegelachse 18' verläuft wieder konzentrisch zur Drehachse 20 der Zylinderlinse 13'.

Wesentlich ist, daß die Zylinderachse 18' des Zylinderspiegels 13' dort, wo das Abbildungslichtbündel 19' auftrifft, auf der optischen Achse 17' des Zylinderspiegels 12' dort, wo das Abbildungslichtbündel 19 auftrifft, optisch senkrecht steht, d.h. relativ zu ihr gekreuzt ist, so daß die beiden beaufschlagten Zylinderspiegelbereiche gemeinsam die Wirkung einer sphärischen Linse haben. Wie man den Figuren 3 und 4 erkennt, werden die beiden Zylinderspiegel 12', 13' also jeweils an zwei um 90° zueinander versetzten Stellen vom Abbildungslichtbündel 19 bzw. 19' beaufschlagt.

Von dem Zylinderspiegel 13' wird das Abbildungslichtbündel 19' als Abbildungslichtbündel 19'' zu einem Spiegelrad 24 reflektiert, dessen Drehachse 30 senkrecht auf der durch die Abbildungslichtbündel 19, 19', 19'' definierten Ebene steht. Das vom Spiegelrad 24 reflektierte Lichtbündel 19''' führt aufgrund der Drehung des Spiegelrades 24 in Richtung des Pfeiles eine V-förmige Abtastbewegung aus und erzeugt auf einer konkav gebogenen Abbildungsfläche 14 den erwünschten Lichtfleck 23. Durch geeignete Verdrehung der beiden Zylinderspiegel 12', 13' um die Drehachsen 20 können unterschiedliche Brennweiten der Zylinderspiegel 12', 13' realisiert und so verschiedene Größen und Formen des Lichtflecks 23 im Sinne der Figuren 2 a, 2 b erzielt werden.

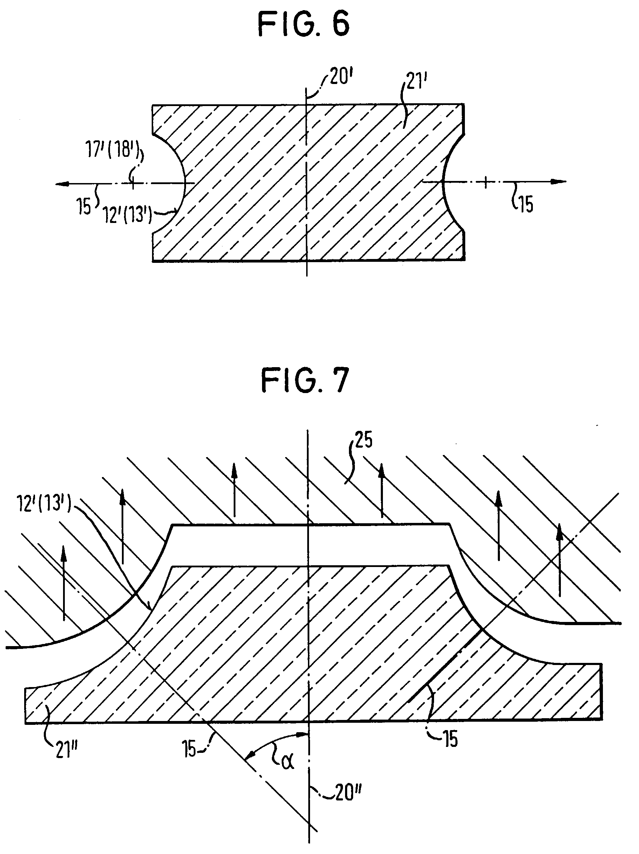

Während nach der Darstellung in ausgezogenen Linien in den Figuren 3 und 4 die Zylinderspiegel-Kreisscheiben 21 gemäß Figur 5 so ausgebildet sind, daß sich auf einer Stirnfläche der Kreisscheibe 21 der rinnenartige Zylinderspiegel 12' bzw. 13' derart befindet, daß die optische Achse 15 an jeder Umfangsstelle parallel zur Drehachse 20 bzw. senkrecht zur betreffenden Stirnfläche der Kreisscheibe 21 verläuft, können nach den gestrichelten Darstellungen in den Figuren 3 und 4 und nach Figur 6 die Zylinderspiegel-Kreisscheiben 21' auch so ausgebildet sein, daß die Zylinderspiegel 12', 13' sich auf dem Außenumfang der Zylinderspiegel-Kreisscheiben 21' befinden. In diesem Fall stellen die optischen Achsen 15 an jeder Umfangsstelle Verlängerungen der Radien der Kreisscheibe 21' an dieser Stelle dar. Die Zylinderspiegelachsen 17' bzw. 18' sind wieder zur Drehachse 20' konzentrische Kreise, die sich jedoch etwas radial außerhalb des Außenumfanges der Zylinderspiegel-Kreisscheibe 21' befinden.

Bei Anordnung im Strahlengang nach den Figuren 3 und 4 müssen die Drehachsen 20' der Zylinderspiegel-Kreisscheiben 21' senkrecht zu den Drehachsen 20 der in ausgezogenen Linien dargestellten Ausführungsform stehen. Im übrigen gilt auch hier die Bedingung, daß die von den Abbildungslichtbündeln 19, 19' beaufschlagten Stellen auf dem Umfang der Kreisscheibe 21' jeweils um 90° zueinander versetzt sind.

Die Zylinderspiegel 12', 13' können aber auch so auf dem Umfang einer Zylinderspiegel-Kreisscheibe 21'' angeordnet sein, wie sich das aus Figur 7 ergibt. In diesem Fall stehen die optischen Achsen 15 an jeder Umfangsstelle beispielsweise unter einem Winkel α von 45° zur Drehachse 20''. Auch jeder andere Winkel α (siehe auch Fig. 3, 4) zwischen 0 und 90° ist denkbar.

Die Ausführungsform nach Figur 7 hat den Vorteil, daß bei Herstellung der Zylinderspiegel-Kreisscheibe 21'' in einer Spritzgußform die den Zylinderspiegel 12' bzw. 13' bildende Formhälfte 25 in Richtung der Drehachse 20'' nach oben von der Kreisscheibe 21'' problemlos abgehoben werden kann. Es ist demnach zweckmäßig, die Zylinderspiegel-Kreisscheibe 21'' so zu gestalten, daß relativ zur Drehachse 20 keine Hinterschneidungen vorliegen, so daß die Kreisscheibe 21'' in einem einzigen Spritzvorgang ohne Grate hergestellt werden kann.

Bei der bevorzugten Ausführungsform der erfindungsgemäßen Lichtfleckerzeugungsanordnung mit Zylinderspiegel-Kreisscheiben 21, 21', 21'' besteht der entscheidende Vorteil darin, daß die unterschiedlichen Brennweiteneinstellungen der beiden Zylinderlinsen 12', 13' nicht nur unabhängig voneinander, sondern auch durch eine einfache Drehbewegung um die Achsen 20, 20', 20'' realisiert werden können.

Zur Scharfstellung des Lichtflecks kann nach den Figuren 3 und 4 die Anordnung aus der Laserdiode 11 und der Strahlaufweitungsoptik 22 in Richtung des Doppelpfeiles 29' verschiebbar angeordnet sein.

### Bezugszeichenliste

- 11: Punktlichtquelle (Laserdiode)
- 12: Zylinderlinse
- 12': Zylinderspiegel
- 13: Zylinderlinse
- 13': Zylinderspiegel
- 14: Abbildungsfläche
- 15: optische Achse
- 16: Umfangsstelle
- 17: Zylinderachse
- 17': Zylinderachse
- 18: Zylinderachse
- 18': Zylinderachse
- 19: Abbildungslichtbündel
- 19': Abbildungslichtbündel
- 19'': Abbildungslichtbündel
- 20: Drehachse
- 21: Zylinderspiegel-Kreisscheibe
- 21': Zylinderspiegel-Kreisscheibe
- 21'': Zylinderspiegel-Kreisscheibe
- 22: Strahlaufweitungsoptik
- 23: Lichtfleck
- 23': Lichtfleck
- 23'': Lichtfleck
- 24: Spiegelrad
- 25: Formhälfte
- 26: Glühlampe
- 27: Doppelpfeil
- 28: Doppelpfeil
- 29: Doppelpfeil
- 29': Doppelpfeil
- 30: Drehachse

## Patentansprüche

1. Lichtfleckerzeugungsvorrichtung mit einer Punktlichtquelle (11) und einer Variooptik (12, 13; 12', 13') veränderlicher Brennweite, mittels der die Punktlichtquelle (11) vorzugsweise über eine Lichtablenkvorrichtung wie ein Spiegelrad (24) in einer Abbildungsfläche (14) mit einem durch die Variooptik (12, 13; 12', 13') vorbestimmten Abbildungsmaßstab abgebildet wird,
dadurch gekennzeichnet,
daß die Variooptik durch zwei gekreuzte Zylinderoptiken (12, 13; 12', 13') mit in Richtung ihrer Zylinderachsen (17, 18; 17', 18') veränderlicher Brennweite, welche in Richtung ihrer Zylinderachsen (17, 18; 17', 18') verschiebbar sind und nacheinander vom Abbildungslichtbündel (19) an Stellen beaufschlagt werden, wo die Zylinderachsen (17, 18; 17', 18') der beiden Zylinderoptiken (12, 13; 12', 13') optisch zueinander senkrecht stehen.

2. Lichtfleckerzeugungsvorrichtung nach Anspruch 1,
dadurch gekennzeichnet,
daß wenigstens eine und vorzugsweise beide Zylinderoptiken Zylinderlinsen (12, 13) sind, und/oder daß wenigstens eine und vorzugsweise beide Zylinderoptiken Zylinderspiegel (12', 13') sind, und/oder daß die Zylinderoptiken (12, 13), d.h. die Zylinderachsen (17, 18) geradlinig sind.

3. Lichtfleckerzeugungsvorrichtung nach einem der Ansprüche 1 bis 2,
dadurch gekennzeichnet,
daß die Zylinderoptiken (12', 13'), d.h. die Zylinderachsen (17', 18') kreisförmig und um die Kreismittelachse als Drehachse (20, 20', 20'') drehbar sind, wobei insbesondere die Zylinderoptiken (12', 13') im Randbereich einer runden Scheiben (21, 21', 21'') vorgesehen sind.

4. Lichtfleckerzeugungsvorrichtung nach Anspruch 3,
dadurch gekennzeichnet,
daß die optischen Achsen (15) der Zylinderoptiken (12', 13') an jeder Stelle der Zylinderachsen (17', 18') unter einem Winkel von 0° bis 90° relativ zur Drehachse (20, 20', 20'') verlaufen, wobei insbesondere die optischen Achsen (15) der Zylinderoptiken (12', 13') parallel oder senkrecht zur Drehachse (20, 20', 20'') verlaufen, oder die optischen Achsen (15) der Zylinderoptiken (12', 13') und einem Winkel von 30° bis 60°, insbesondere etwa 45° zur Drehachse (20, 20', 20'') verlaufen.

5. Lichtfleckerzeugungsvorrichtung nach einem der Ansprüche 2 bis 4,
dadurch gekennzeichnet,
daß die Zylinderspiegel (12', 13') in jedem Axialschnitt relativ zur Drehachse (20, 20', 20'') nur einen Neigungs sinn aufweisen.

6. Lichtfleckerzeugungsvorrichtung nach einem der vorhergehenden Ansprüche,
dadurch gekennzeichnet,
daß die Brennweitenänderung entlang der Zylinderachsen (17, 18; 17', 18') stetig erfolgt, wobei insbesondere die Brennweitenänderung entlang der Zylinderachsen (17, 18; 17', 18') stetig zu- bzw. abnimmt.

7. Lichtfleckerzeugungsvorrichtung nach Anspruch 6 mit kreisförmigen Zylinderoptiken (12', 13'),
dadurch gekennzeichnet,
daß an einer Stelle (16) des Umfanges eine sprungartige Änderung der Brennweite erfolgt.

8. Lichtfleckerzeugungsvorrichtung nach einem der vorhergehenden Ansprüche,
dadurch gekennzeichnet,
daß die Zylinderoptiken (12, 13; 12', 13') in jeder Schnittebene senkrecht zur Zylinderachse (17, 18; 17', 18') teilkreisförmige Oberflächen aufweisen, wobei insbesondere der Radius der Teilkreise sich entlang der Zylinderachsen (17, 18; 17', 18') von 10 bis 200 cm, vorzugsweise 20 bis 150 cm und insbesondere 30 bis 120 cm ändert.

9. Lichtfleckerzeugungsvorrichtung nach einem der vorhergehenden Ansprüche,
dadurch gekennziechnet,
daß die Zylinderoptiken (12, 13; 12', 13') vom Abbil dungslichtbündel (19, 19') schräg zur optischen Achse beaufschlagt sind, und zwar vorzugsweise in einer Ebene, die senkrecht zur Zylinderachse (17, 18; 17', 18') steht.

10. Lichtfleckerzeugungsvorrichtung nach einem der vorhergehenden Ansprüche,
dadurch gekennzeichnet,
daß die Punktlichtquelle ein Laser, insbesondere eine Laserdiode (11) ist, der vorzugsweise eine Strahlaufweitungsoptik (22) nachgeschaltet ist.
